# EUROPEAN PATENT APPLICATION

(11) **EP 2 611 009 A1**
(43) Date of publication of application: **03.07.2013**
(21) Application number: 12199468.5
(22) Date of filing: 27.12.2012
(51) Int. Cl.: H02K 21/02, H02K 21/14, F04D 25/08

(54) **Motor for driving extractor fans**

(30) Priority: 30.12.2011 IT VR20110241
(71) Applicant: Everel Group S.p.A., 37067 Valeggio sul Mincio (VR) (IT)
(72) Inventor: Manfrin, Rodolfo, 37067 VALEGGIO SUL MINCIO VR (IT)
(74) Representative: Modiano, Micaela Nadia

(57) **Abstract**

A motor (1) for driving extractor fans, which comprises a brushless DC permanent-magnet motor (BLDC).

## Description

The present invention relates to a motor for driving extractor fans, typically inside bathrooms or environments that necessitate a forced exchange of air.

Nowadays, for driving extraction fans, AC motors are used with the rotor made of metal plate (these are also known as AC induction motors with screened poles).

Such solution is extremely low-cost and does not necessitate control and commutation cards since the motor can be connected directly to the mains power supply.

Greater attention to energy consumption problems however makes the solution offered today disadvantageous.

In this regard, it should be noted that some regulations aimed at optimizing energy savings require performing the exchange of air continuously by way of extractor fans.

The aim of the present invention is to make available a motor for driving extractor fans which is capable of eliminating the above-mentioned drawbacks.

Within this aim, an object of the present invention is to provide a motor for driving extractor fans which makes it possible to drastically reduce electrical consumption but which is still low-cost.

Another object of the invention is to provide a motor for driving extractor fans which is adaptable and which can be easily installed on extractor fans currently on the market.

This aim and these and other objects which will become more apparent hereinafter are achieved by a motor for driving extractor fans according to claim 1.

Further characteristics and advantages of the invention will become more apparent from the description of some preferred, but not exclusive, embodiments of a motor for driving extractor fans, illustrated by way of non-limiting example in the accompanying drawings wherein:

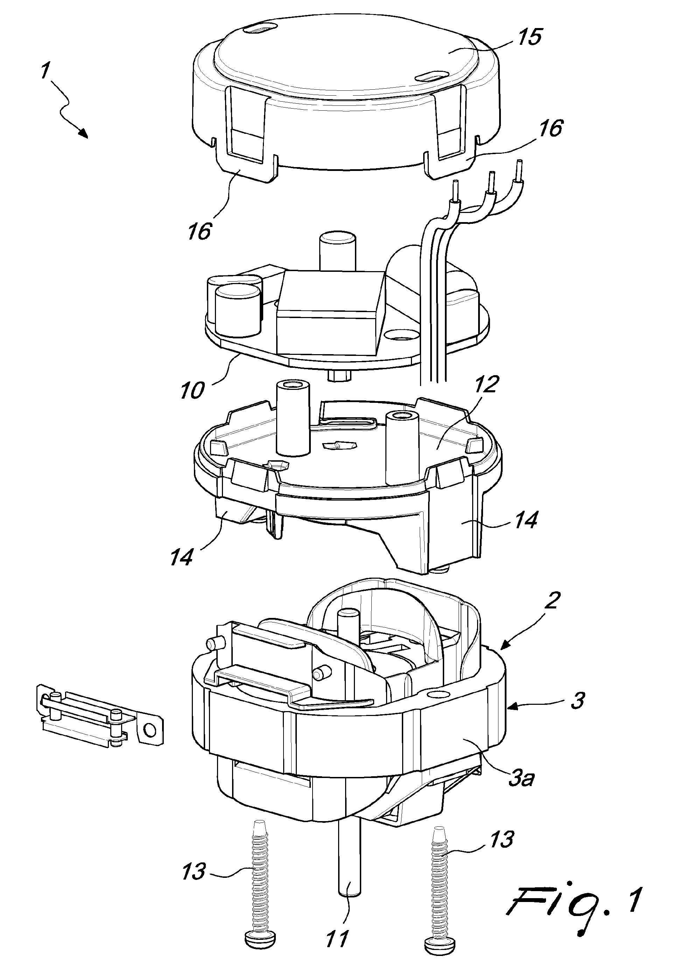

Figure 1 is an exploded perspective view of a motor for driving extractor fans according to the present invention;

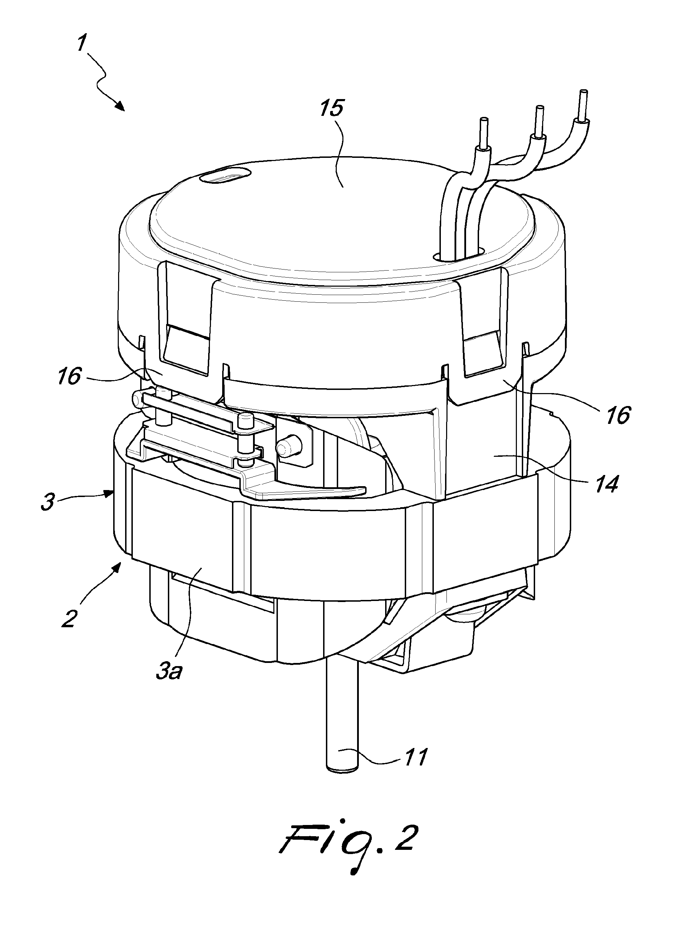

Figure 2 is another perspective view of a motor for driving extractor fans.

In the following embodiments illustrated, individual characteristics shown in relation to specific examples may in reality be interchanged with other, different characteristics, existing in other embodiments.

With reference to the figures, the present invention relates to a motor, generally designated by the reference numeral 1, for driving extractor fans.

Advantageously, the motor 1 is adapted to drive extractor fans that are arranged inside bathrooms, in private homes or commercial establishments such as shops, bars, or restaurants, or in environments that necessitate a forced exchange of air.

According to the present invention, the motor 1 comprises a brushless DC permanent-magnet motor (commercially known by the acronym BLDC).

Delving deeper into the details, the brushless DC permanent-magnet motor 1 comprises a motor body 2 which is electrically connected to a control card 10 which is connected to the mains power supply.

Specifically, the control card 10 has an electronic commutator for converting mains current from AC to DC.

The motor body 2 comprises a stator 3 which accommodates a permanent-magnet rotor 4.

Advantageously, the stator 3 comprises a collar 3a which is shaped structurally and dimensionally so as to correspond to a collar of a stator of an AC motor for driving extractor fans.

More generally, the brushless DC permanent-magnet motor (BLDC) 1 has substantially the same space occupation as an AC motor for driving extractor fans.

In this manner one can proceed to install in an extremely practical and effective manner the motors 1 according to the invention on extractor fans that currently use AC motors.

In particular, the control card provides the commutation necessary for BLDC motors of this type.

According to a particularly important aspect of the present invention, it is possible to modify a traditional AC motor (in its function and size) in order to adapt some of its parts to be integrated in a brushless DC permanent-magnet motor (BLDC) 1 by eliminating, specifically, what is called the "shading ring" and by operating on the existing stator slot so as to enable the starting of the brushless DC permanent-magnet motor (BLDC).

It is particularly advantageous to use brushless motors 1 that have a transverse cross-section substantially similar to traditional AC motors and thus, specifically, with a transverse cross-section that can be inserted within a circumference as illustrated, inter alia, in the figures.

Considering the control card 10, it is possible to fix to the rotor, on the side opposite to the output shaft 11, a support flange 12.

The fixing can be carried out by way of a pair of screws 13 passing through the collar 3a and engaging with their tip inside fixing tabs 14 which are integral with the support flange 12.

The support flange 14 can be associated with the control card 10.

Further provided is a closing cover 16 that is removably lockable, by way of snap-acting engagement bodies 16, to the support flange 12 in order to form a closed accommodation of the control card 10.

The use of a motor 1 according to the invention is evident from the foregoing description.

In practice it has been found that in all the embodiments the invention has achieved the intended aim and objects.

In practice the materials employed, as well as the dimensions and the contingent shapes, may be any according to requirements.

Moreover, all the details may be substituted by other, technically equivalent elements.

The disclosures in Italian Patent Application No. PD2011A000241 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A motor (1) for driving extractor fans, **characterized in that** it comprises a brushless DC (BLDC) permanent-magnet motor.

2. The motor (1) according to claim 1, **characterized in that** said brushless DC permanent-magnet motor is adapted to drive extractor fans arranged inside bathrooms of private homes or commercial establishments such as shops, bars, restaurants or the like.

3. The motor (1) according to one or more of the preceding claims, **characterized in that** said brushless DC permanent-magnet motor comprises a motor body (2) which is connected electrically to a control card (10) connected to the mains power supply, said control card (3) having an electronic commutator for converting mains current from AC to DC.

4. The motor (1) according to one or more of the preceding claims, **characterized in that** said motor body (2) comprises a stator (3) which accommodates a permanent-magnet rotor (4).

5. The motor (1) according to one or more of the preceding claims, **characterized in that** said stator (3) comprises a collar (3a) which is shaped structurally and dimensionally so as to correspond to a collar of a stator of an AC motor for driving extractor fans.

6. The motor (1) according to one or more of the preceding claims, **characterized in that** said brushless DC (BLDC) permanent-magnet motor has substantially the same space occupation as an AC motor for driving extractor fans.

7. The motor (1) according to one or more of the preceding claims, **characterized in that** said brushless DC (BLDC) permanent-magnet motor (1) comprises at least partially a traditional AC motor, modified by elimination of what is called the "shading ring" and/or by operation on the existing stator slot.

8. An extractor fan, **characterized in that** it comprises a motor according to one or more of the preceding claims.
